# EUROPEAN PATENT APPLICATION

(11) **EP 4 498 487 A2**
(43) Date of publication of application: **29.01.2025**
(21) Application number: 24196655.5
(22) Date of filing: 23.08.2021
(51) Int. Cl.: H01M 50/148

(54) **BATTERY CELL, METHOD AND SYSTEM FOR MANUFACTURING A BATTERY CELL, BATTERY AND ELECTRICAL DEVICE**

(62) Divisional of application: 21876743.2
(71) Applicant: Contemporary Amperex Technology (Hong Kong) Limited, Central, Central And Western District (HK)
(72) Inventor: FANG, Kun, Ningde, 352100 (CN); GUO, Zhijun, Ningde, 352100 (CN); JIN, Haizu, Ningde, 352100 (CN)
(74) Representative: Gong, Jinping

(57) **Abstract**

The embodiments of the present application provide a battery cell, a method and system for manufacturing a battery cell, a battery and an electrical device. The battery cell includes: an electrode assembly, including a first tab and a second tab with opposite polarities; a casing for accommodating the electrode assembly, wherein the casing includes a cylinder body and a cover body connected to the cylinder body, the cylinder body is disposed around an outer periphery of the electrode assembly, the cover body is provided with an electrode lead-out hole, and at least part of the cover body is used for electrically connecting a first connecting member of the battery and the first tab; and an electrode terminal for electrically connecting a second connecting member of the battery and the second tab, wherein the electrode terminal is disposed at the cover body in an insulating manner and installed at the electrode lead-out hole, one of the cover body and the electrode terminal is a positive output pole of the battery cell, and the other is a negative output pole of the battery cell. The present application can improve an ability of allowing current to pass through of the battery cell and simplify a structure of the battery cell.

## Description

### TECHNICAL FIELD

The present application relates to the technical field of batteries, and in particular, to a battery cell, a method and system for manufacturing a battery cell, a battery and an electrical device.

### BACKGROUND

Battery cells are widely used in electronic equipment, such as a mobile phone, a notebook computer, a battery car, an electric vehicle, an electric plane, an electric ship, an electric toy vehicle, an electric toy ship, an electric toy plane, and an electric tool, and the like. The battery cells may include a nickel-cadmium battery cell, a nickel-hydrogen battery cell, a lithium ion battery cell, a secondary alkaline zinc-manganese battery cell, and the like.

In the development of battery technology, how to improve the ability of allowing current to pass through of battery cells and simplify the structure of battery cells is a research direction in battery technology.

### SUMMARY

The present application provides a battery cell, a method and system for manufacturing a battery cell, a battery and an electrical device, which can improve an ability of allowing current to pass through of the battery cell and simplify a structure of the battery cell.

In a first aspect, the embodiments of the present application provide a battery cell for use in a battery, including:
an electrode assembly, including a first tab and a second tab with opposite polarities;
a casing for accommodating the electrode assembly, wherein the casing includes a cylinder body and a cover body connected to the cylinder body, the cylinder body is disposed around an outer periphery of the electrode assembly, the cover body is provided with an electrode lead-out hole, and at least part of the cover body is used for electrically connecting a first connecting member of the battery and the first tab; and
an electrode terminal for electrically connecting a second connecting member of the battery and the second tab, wherein the electrode terminal is disposed at the cover body in an insulating manner and installed at the electrode lead-out hole, one of the cover body and the electrode terminal is a positive output pole of the battery cell, and the other is a negative output pole of the battery cell.

In the above technical solutions, by using the cover body and the electrode terminal as output poles, the structure of the battery cell can be simplified, and the ability of allowing current to pass through of the battery cell can be ensured. The cover body and the electrode terminal are located at a same end of the battery cell, so that the first connecting member and the second connecting member can be assembled on a same side of the battery cell, which can simplify an assembly process and improve an efficiency of assembling a plurality of battery cells into a group.

In some embodiments, the cover body and the cylinder body are formed as an integral structure. The integral structure can save a connection process of the cover body and the cylinder body.

In some embodiments, the cover body includes a connecting portion and a bending portion, the electrode lead-out hole is provided on the connecting portion, at least a portion of the connecting portion is used for connecting the first connecting member and the first tab, and the bending portion is used for connecting the cylinder body and the connecting portion.

In the above technical solutions, the bending portion may release stress during the process of forming the casing, reduce stress concentration, and reduce a risk of breaking of the casing.

In some embodiments, the connecting portion includes a main body portion and a first concave portion, the main body portion is disposed around an outer periphery of the first concave portion, the main body portion is used for connecting the first connecting member and the first tab, the first concave portion is recessed from an outer surface of the main body portion in a direction facing the electrode assembly, the electrode lead-out hole penetrates a bottom wall of the first concave portion, and communicates the first concave portion with an inner portion of the casing. The battery cell further includes a first insulating member, the first concave portion is configured to accommodate at least a portion of the first insulating member, and a portion of the first insulating member that is accommodated within the first concave portion is attached to a side wall and/or the bottom wall of the first concave portion.

In the above technical solutions, by arranging the first concave portion, the first insulating member can be positioned, thereby simplifying the assembly process. The first concave portion can accommodate at least a portion of the first insulating member, which can reduce a size of the first insulating member protruding from the outer surface of the main body portion, thereby reducing a maximum size of the battery cell and improving an energy density.

In some embodiments, a thickness of the main body portion is greater than a wall thickness of the cylinder body. The main body portion is used for connecting with the first connecting member, so the main body portion needs to have a relatively large thickness to ensure a connection strength between the main body portion and the first connecting member. In addition, the main body portion having a relatively large thickness may support components such as the electrode terminal in a better way. The cylinder body mainly separates the electrode assembly from the outside, and may have a relatively small thickness to reduce an overall weight of the battery cell.

In some embodiments, a difference between the thickness D1 of the main body portion and the wall thickness D2 of the cylinder body satisfies: 0.1 mm≤D1-D2≤2 mm.

If D1-D2 is less than 0.1 mm, then the thickness of the main body portion is too small or the thickness of the cylinder body is too large. If the thickness of the main body portion is too small, this may cause that a strength of the main body portion is insufficient, and if the thickness of the cylinder body is too large, this may cause that a weight of the cylinder body will be too large, which will affect the energy density. If D1-D2 is greater than 2 mm, then during the stretching process, a difference between a stretching amount of the main body portion and a stretching amount of the cylinder body is too large, and the cylinder body is easily damaged during the stretching process. Therefore, the embodiments of the present application makes D1 and D2 satisfy: 0.1 mm≤D1-D2≤2 mm.

In some embodiments, the cylinder body is cylindrical, the electrode lead-out hole is a circular hole, a central axis of the cylinder body and a central axis of the electrode lead-out hole are arranged to overlap.

In the above technical solutions, the electrode lead-out hole is used to limit a position of the electrode terminal, and the central axis of the electrode lead-out hole and the central axis of the cylinder body are arranged to overlap in the embodiments, so that at least part of the electrode terminal can be located at a central position of the cover body. In this way, under a condition that a plurality of battery cells are assembled into a group, requirements on an accuracy of a position of the electrode terminal can be reduced, the assembly process can be simplified, and an assembly efficiency can be improved.

In some embodiments, an inner radius L1 of the cylinder body and a width L2 of the main body portion satisfy: 0.2 ^ L2/L 1 ^ 0.8, and the width L2 of the main body portion is a difference between an outer radius of the main body portion and an inner radius of the main body portion.

In the above technical solutions, on the premise that the inner radius L1 of the cylinder body is constant, the width L2 of the main body portion is negatively correlated with the radius of the electrode lead-out hole. If the width L2 of the main body portion is too small, this will cause that the ability of allowing current to pass through of the main body portion is insufficient; if the width L2 of the main body portion is too large, this will cause that the radius of the electrode lead-out hole is too small, and the ability of allowing current to pass through of the electrode terminal is insufficient.. Through experiments, the inventors found that when the inner radius L1 of the cylinder body and the width L2 of the main body portion satisfy: 0.2≤L2/L1≤0.8, the ability of allowing current to pass through of the main body portion and the ability of allowing current to pass through of the electrode terminal can be balanced in a better way, to meet the requirements for the overcurrent capacity of the battery cell.

In some embodiments, the main body portion is used for welding with the first connecting member and forming a first welding area on the main body portion, the first welding area is disposed to be spaced apart from a first end portion of the bending portion, and the first end portion is used for connecting the main body portion.

In the above technical solutions, the first welding area is disposed to be spaced apart from the first end portion of the bending portion, to reduce a risk of being welded to the bending portion in the welding process due to a process error, thereby reducing a possibility of virtual welding and ensuring a connection strength between the main body portion and the first connection member.

In some embodiments, a welding depth D3 of the first welding area and the thickness D1 of the main body portion satisfy: 0.1≤D3/D1≤0.8.

In the above technical solutions, if a value of D3/D 1 is too small, then a volume of the first welding area is too small, which will lead to insufficient connection strength and low ability of allowing current to pass through between the main body portion and the first connecting member. Therefore, in the embodiments, the value of D3/D1 is set to be greater than or equal to 0.1, so as to ensure the connection strength and the ability of allowing current to pass through between the main body portion and the first connecting member. If the value of D3/D 1 is too large, then the power required for welding is also high, and a high temperature generated during welding is likely to burn other components. In addition, if the value of D3/D 1 is too large, a risk of the main body portion being melted through will also increase, and after the main body portion is melted through, it is more likely to burn other components in the casing. Therefore, in the embodiments of the present application, the value of D3/D 1 is set to be less than or equal to 0.8, so as to reduce a temperature during welding and reduce a risk of burning other components.

In some embodiments, the battery cell further includes a second insulating member, the second insulating member includes an insulating body and an insulating protrusion protruding from an outer periphery of the insulating body, the insulating body abuts on a side of the main body portion facing the electrode assembly, the insulating protrusion is arranged on a side of the bending portion facing the electrode assembly, a surface of the insulating protrusion away from the electrode assembly is closer to the electrode assembly than a surface of the insulating body away from the electrode assembly, so as to form a second concave portion for avoiding the bending portion.

In the above technical solutions, the insulating body can separate at least a portion of the main body portion from the electrode assembly, and the insulating protrusion can separate at least part of the bending portion from the electrode assembly, so that when the battery cell vibrates, a risk of the electrode assembly coming into contact with the main body portion and a risk of the electrode assembly coming into contact with the bending portion can reduced in the embodiments, thereby improving the safety performance. In the embodiments, the second concave portion is provided to avoid the bending portion to avoid interference between the bending portion and the second insulating member.

In some embodiments, the insulating protrusion protrudes beyond a second end portion of the bending portion in the direction facing the electrode assembly, and the second end portion is used for connecting the cylinder body.

In the above technical solutions, the outer surface of the insulating protrusion is spaced from an inner surface of the bending portion to avoid interference between the insulating protrusion and the bending portion. A size of the insulating protrusion protruding from the insulating body is not affected by the bending portion, so that an isolation effect of the insulating protrusion can be improved.

In some embodiments, an inner surface of the insulating body is formed with a third concave portion recessed in a direction away from the electrode assembly, and at least part of the electrode terminal is accommodated within the third concave portion. By arranging the third concave portion, a space occupied by the second insulating member and the electrode terminal can be reduced, so as to improve the energy density of the battery cell.

In some embodiments, a thickness of the insulating body is greater than a thickness of the main body portion. When the main body portion and the first connecting member are welded, heat will be transferred to the insulating body. In the embodiments, the thickness of the insulating body is larger than the thickness of the main body portion, so as to prolong a heat transfer path and reduce an influence of heat on other components. The insulating body in the embodiments has a relatively large thickness, so that even if a portion of the insulating body close to the first welding area is burned, an insulating effect can be ensured.

In some embodiments, a convex portion is formed at a position on the connecting portion opposite to the first concave portion, and the convex portion protrudes from an inner surface of the main body portion in the direction facing the electrode assembly. The connecting portion further includes a fourth concave portion, the fourth concave portion is recessed from a top end surface of the convex portion to the inner surface of the main body portion in the direction away from the electrode assembly. The battery cell further includes a second insulating member, the fourth concave portion is configured to accommodate at least part of the second insulating member, and the part of the second insulating member that is accommodated within the fourth concave portion is attached to a side wall and/or a bottom wall of the fourth concave portion.

In the above technical solutions, by arranging the convex portion, a thickness of the bottom wall of the first concave portion can be increased, so as to improve a strength of the bottom wall of the first concave portion, so that the bottom wall of the first concave portion can effectively support the electrode terminal. The second insulating member can cover the main body portion from the inside to separate the electrode assembly from the main body portion, thereby reducing a risk of contact and conduction between the electrode assembly and the main body portion when the battery cell vibrates, and improving the safety performance. By arranging the fourth concave portion, the second insulating member can be positioned, thereby simplifying the assembly process. The fourth concave portion can accommodate at least part of the second insulating member, so that an inner space of the casing can be fully utilized and the energy density can be improved.

In some embodiments, the bending portion includes a first end portion for connecting the connecting portion and a second end portion for connecting the cylinder body, and in a direction from the first end portion to the second end portion, a thickness of the bending portion gradually decreases.

In the above technical solutions, the thickness of the bending portion is enabled to change gradually, so as to adapt to a thickness difference between the connecting portion and the cylinder body, to smoothly connect the cylinder body and the connecting portion, which reduces a risk that an inner surface and an outer surface of the casing form a step, and reduces stress concentration.

In some embodiments, the second tab is provided at one end of the electrode assembly facing the cover body, and the first tab is provided at the other end of the electrode assembly away from the cover body. The cylinder body is used for connecting the first tab and the cover body to enable the first tab to be electrically connected to the cover body.

In the above technical solutions, the first tab and the second tab are provided at two ends of the electrode assembly, which can reduce a risk of conduction between the first tab and the second tab, and increase a current passing through area of the first tab and a current passing through area of the second tab.

In some embodiments, the first tab is a negative pole tab, and a base material of the casing is steel. The casing is electrically connected to the negative pole tab, that is, the casing is in a low potential state. The casing made of steel is not easily corroded by electrolyte in a low potential state, so as to reduce safety risks.

In some embodiments, the cylinder body has an opening at one end away from the cover body, and the battery cell further includes a cover plate for closing the opening.

In a second aspect, the embodiments of the present application provide a battery, including: the battery cell of any embodiment of the first aspect; the first connecting member connected to the cover body; and the second connecting member connected to the electrode terminal.

In a third aspect, the embodiments of the present application provide an electrical device, including the battery of the second aspect, and the battery is used for providing electrical energy.

In a fourth aspect, the embodiments of the present application provide a method for manufacturing a battery cell, including:
providing a casing and an electrode terminal, wherein the casing includes a cylinder body and a cover body connected to the cylinder body, the cover body is provided with an electrode lead-out hole, the cylinder body has an opening at one end away from the cover body, and the electrode terminal is disposed at the cover body in an insulating manner and installed at the electrode lead-out hole;
providing an electrode assembly including a first tab and a second tab with opposite polarities;
installing the electrode assembly into the casing to enable the cylinder body to be disposed around an outer periphery of the electrode assembly and the second tab to be electrically connected to the electrode terminal;
providing a cover plate, wherein the cover plate is connected to the cylinder body to close an opening of the cylinder body, and the first tab is electrically connected to the cover plate to enable the first tab to be electrically connected to the cover body through the cover plate and the cylinder body;
wherein, at least part of the cover body is used for electrically connecting the first connecting member of the battery and the first tab, the electrode terminal is used for electrically connecting the second connecting member of the battery and the second tab, one of the cover body and the electrode terminal is a positive output pole of the battery cell, and the other is a negative output pole of the battery cell.

In a fifth aspect, the embodiments of the present application provide a system for manufacturing a battery cell, including:
a first providing means for providing a casing and an electrode terminal, wherein the casing includes a cylinder body and a cover body connected to the cylinder body, the cover body is provided with an electrode lead-out hole, the cylinder body has an opening at one end away from the cover body, and the electrode terminal is disposed at the cover body in an insulating manner and installed at the electrode lead-out hole;
a second providing means for providing an electrode assembly including a first tab and a second tab with opposite polarities;
a first assembling means for installing the electrode assembly into the casing to enable the cylinder body to be disposed around an outer periphery of the electrode assembly and the second tab to be electrically connected to the electrode terminal;
a second assembling means for providing a cover plate, wherein the cover plate is connected to the cylinder body to close an opening of the cylinder body, and the first tab is electrically connected to the cover plate to enable the first tab to be electrically connected to the cover body through the cover plate and the cylinder body;
wherein, at least part of the cover body is used for electrically connecting the first connecting member of the battery and the first tab, the electrode terminal is used for electrically connecting the second connecting member of the battery and the second tab, one of the cover body and the electrode terminal is a positive output pole of the battery cell, and the other is a negative output pole of the battery cell.

### BRIEF DESCRIPTION OF THE DRAWINGS

In order to more clearly describe technical solutions of the embodiments of the present application, the drawings that need to be used in the embodiments of the present application will be briefly introduced below. Obviously, the drawings described below are only some embodiments of the present application. For those of ordinary skill in the art, without creative work, other drawings can be obtained based on the drawings.
Fig. 1 is a structural schematic diagram of a vehicle according to some embodiments of the present application;
Fig. 2 is an exploded schematic diagram of a battery according to some embodiments of the present application;
Fig. 3 is an exploded schematic diagram of a battery module shown in Fig. 2;
Fig. 4 is a partial cross-sectional schematic diagram of a battery according to some embodiments of the present application;
Fig. 5 is an exploded schematic diagram of a battery cell according to some embodiments of the present application;
Fig. 6 is an enlarged schematic diagram of the battery shown in Fig. 4 at block A;
Fig. 7 is a partial cross-sectional schematic diagram of a casing of a battery cell according to some embodiments of the present application;
Fig. 8 is an enlarged schematic diagram of the battery shown in Fig. 6 at circle frame B;
Fig. 9 is a structural schematic diagram of a second insulating member of a battery cell according to some embodiments of the present application;
Fig. 10 is an enlarged schematic diagram of the battery shown in Fig. 6 at circle frame C;
Fig. 11 is a structural schematic diagram of an electrode terminal of a battery cell according to some embodiments of the present application;
Fig. 12 is a schematic flowchart of a method for manufacturing a battery cell according to some embodiments of the present application;
Fig. 13 is a schematic block diagram of a system for manufacturing a battery cell according to some embodiments of the present application.

In the drawings, the drawings are not drawn to actual scale.

### DETAILED DESCRIPTION

In order to make purposes, technical solutions and advantages of the embodiments of the present application clearer, the technical solutions in the embodiments of the present application will be clearly described below in conjunction with the drawings in the embodiments of the present application. Obviously, the described embodiments are some, but not all, of the embodiments of the present application. Based on the embodiments in the present application, all other embodiments obtained by those of ordinary skill in the art without creative work fall within the protection scope of the present application.

Unless otherwise defined, all technical and scientific terms used in the present application have the same meanings as commonly understood by those skilled in the technical field of the present application; in the present application, the terms used in the description of the present application are only for purposes of description of specific embodiments, and are not intended to limit the present application; the terms "comprising" and "having" in the description and claims of the present application and the above description of the drawings and any variations thereof are intended to cover non-exclusive inclusions. The terms "first", "second" and the like in the description and claims of the present application or the above drawings are used to distinguish different objects, rather than to describe a specific order or primary and secondary relationship.

Reference to "embodiment" in the present application means that a particular feature, structure or characteristic described in connection with the embodiment may be included in at least one embodiment of the present application. Appearances of the phrase in various places in the specification are not necessarily all referring to the same embodiment, nor a separate or alternative embodiment that is mutually exclusive of other embodiments.

In the description of the present application, it should be noted that, unless otherwise expressly specified and limited, the terms "installed", "connected", "connection" and "attached" should be understood in a broad sense, for example, they may refer to a fixed connection, and may also refer to a detachable connection, or an integral connection; it may refer to a direct connection, and may also refer to an indirect connection through an intermediate medium, or an internal communication between two components. For those of ordinary skill in the art, the specific meanings of the above terms in the present application can be understood according to specific situations.

Term "and/or" in the present application, is only a kind of association relationship that describes associated objects, and indicates that there can be three kinds of relationships. For example, A and/or B may indicate the following three cases: A exists alone, A and B exist simultaneously, and B exists alone. In addition, the character "/" in the present application generally indicates that the related objects have an "or" relationship.

In the embodiments of the present application, the same reference numerals denote the same components, and for brevity, in different embodiments, detailed descriptions of the same components are omitted. It should be understood that dimensions, such as a thickness, a length and a width, etc., of various components in the embodiments of the present application shown in the drawings, as well as an overall thickness, a length and a width, etc. of an integrated device are only exemplary descriptions, and should not constitute any limitation to the present application.

The "plurality" that appears in the present application refers to two or more (including two).

In the present application, the battery cells may include a lithium ion secondary battery cell, a lithium ion primary battery cell, a lithium sulfur battery cell, a sodium lithium ion battery cell, a sodium ion battery cell or a magnesium ion battery cell, etc., which are not limited in the embodiments of the present application.

A battery mentioned in the embodiments of the present application refers to a single physical module including one or more battery cells to provide a higher voltage and capacity. A battery typically includes a box body for enclosing one or more battery cells. The box body may prevent liquids or other foreign objects from affecting the charging or discharging of the battery cells.

A battery cell includes an electrode assembly and electrolyte, and the electrode assembly includes a positive pole piece, a negative pole piece and a separator. The battery cell mainly relies on a movement of metal ions between the positive pole piece and the negative pole piece to work. The positive pole piece includes a positive pole current collector and a positive pole active material layer, and the positive pole active material layer is coated on a surface of the positive pole current collector; the positive pole current collector includes a positive pole current-collecting component and a positive pole tab protruding from the positive pole current-collecting component, the positive pole current-collecting component is coated with the positive pole active material layer, and at least a portion of the positive pole tab is not coated with the positive pole active material layer. Taking a lithium ion battery as an example, a material of the positive pole current collector may be aluminum, the positive pole active material layer includes a positive pole active material, and the positive pole active material may be lithium cobalt oxide, lithium iron phosphate, ternary lithium or lithium manganate, etc. The negative pole piece includes a negative pole current collector and a negative pole active material layer, and the negative pole active material layer is coated on a surface of the negative pole current collector; the negative pole current collector includes a negative pole current-collecting component and a negative pole tab protruding from the negative pole current-collecting component, the negative pole current-collecting component is coated with the negative pole active material layer, and at least a portion of the negative pole tab is not coated with the negative pole active material layer. A material of the negative pole current-collecting component may be copper, the negative pole active material layer includes a negative pole active material, and the negative pole active material may be carbon or silicon, and the like. A material of the separator may be PP (polypropylene) or PE (polyethylene).

In a battery, a plurality of battery cells are electrically connected through a bus component. In order to simplify a structure of the battery, the inventors arrange a positive output pole and a negative output pole of a battery cell at a same end of the battery cell, so that the bus component is connected to the positive output pole and the negative output pole.

A battery cell is usually provided with an electrode terminal, and the electrode terminal is used as an output pole. The inventors tried to arrange two electrode terminals at a same end of the battery cell, to serve as a positive output pole and a negative output pole of the battery cell, respectively. However, the inventors found that for a battery cell with a small size, if two electrode terminals are provided at a same end of the battery cell, in order to facilitate an assembly of the electrode terminals and the bus component, it is necessary to ensure that a distance between the two electrode terminals is relatively large, this will compress a size of the electrode terminals themselves, resulting in a small current passing through area of the electrode terminals, which affects an ability of allowing current to pass through of the battery cell.

In view of this, the embodiments of the present application provide a technical solution, which uses a cover body of a casing as an output pole, and arranges the cover body and an electrode terminal at a same end of a battery cell, which can simplify a structure of the battery cell and ensure an ability of allowing current to pass through of the battery cell.

The technical solutions described in the embodiments of the present application are applicable to a battery and an electrical device using a battery.

The electrical device may be a vehicle, a mobile phone, a portable device, a notebook computer, a ship, a spacecraft, an electric toy, an electric tool, and the like. The vehicle may be a fuel vehicle, a gas vehicle or a new energy vehicle, and the new energy vehicle may be a pure electric vehicle, a hybrid vehicle or an extended-range vehicle, etc.; the spacecraft includes an airplane, a rocket, a space shuttle, a spacecraft, etc.; the electric toy includes a fixed or movable electric toy, such as a game console, an electric vehicle toy, an electric ship toy and an electric plane toy, etc.; the electric tool includes a metal-cutting electric tool, a grinding electric tool, an assembling electric tool and a railway electric tool, such as, an electric drill, an electric grinder, an electric wrench, an electric screwdriver, an electric hammer, an electric impact drill, a concrete vibrator and an electric planer, etc. The embodiments of the present application do not impose special restrictions on the above-mentioned electrical device.

In the following embodiments, for the convenience of description, the description are given by taking an example where the electric device is a vehicle.

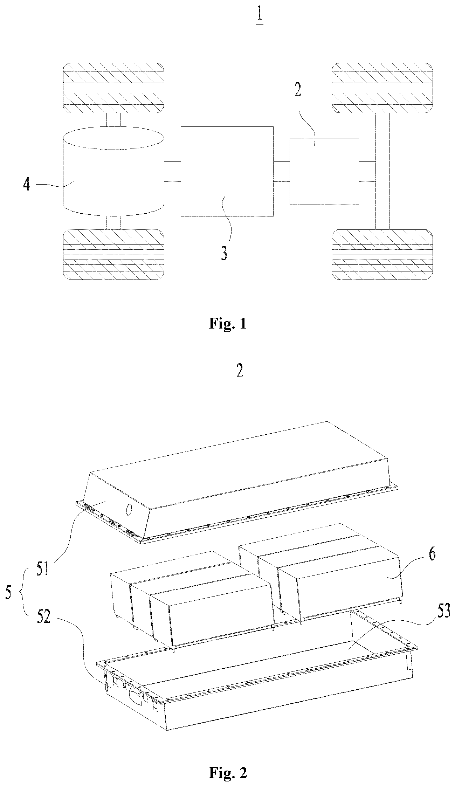

Fig. 1 is a structural schematic diagram of a vehicle according to some embodiments of the present application. As shown in Fig. 1, an inner portion of a vehicle 1 is provided with a battery 2, and the battery 2 may be provided at a bottom, a head or a tail of the vehicle 1. The battery 2 may be used for power supply of the vehicle 1, for example, the battery 2 may be used as an operating power source of the vehicle 1.

The vehicle 1 may also include a controller 3 and a motor 4, and the controller 3 is used to control the battery 2 to supply power to the motor 4, for example, for operating power demands while the vehicle 1 is starting, navigating, and driving.

In some embodiments of the present application, the battery 2 not only may be used as the operating power source of the vehicle 1, but also may be used as a driving power source of the vehicle 1 to provide driving power for the vehicle 1 instead of or partially instead of fuel or natural gas.

Fig. 2 is an exploded schematic diagram of a battery according to some embodiments of the present application. As shown in Fig. 2, the battery 2 includes a box body 5 and battery cells (not shown in Fig. 2), and the battery cells are accommodated within the box body 5.

The box body 5 is used for accommodating the battery cells, and the box body 5 may be of various structures. In some embodiments, the box body 5 may include a first box body portion 51 and a second box body portion 52, the first box body portion 51 and the second box body portion 52 are covered with each other, and the first box body portion 51 and the second box body portion 52 together define an accommodating space 53 for accommodating battery cells. The second box body portion 52 may be a hollow structure with one end open, the first box body portion 51 is a plate-like structure, and the first box body portion 51 covers an opening side of the second box body portion 52, so as to form the box body 5 having the accommodating space 53; both the first box body portion 51 and the second box body portion 52 may be hollow structures with one end open, and an opening side of the first box body portion 51 covers the opening side of the second box body portion 52, so as to form the box body 5 having the accommodating space 53. Of course, the first box body portion 51 and the second box body portion 52 may have various shapes, such as a cylinder, a cuboid, and the like.

In order to improve an airtightness after the first box body portion 51 and the second box body portion 52 are connected, a sealing member, such as sealant, a sealing ring, etc., may also be provided between the first box body portion 51 and the second box body portion 52.

Assuming that the first box body portion 51 covers a top of the second box body portion 52, the first box body portion 51 may also be referred to as an upper box cover, and the second box body portion 52 may also be referred to as a lower box body.

In the battery 2, there may be one battery cell or a plurality of battery cells. If there are a plurality of battery cells, the plurality of battery cells may be connected in series or in parallel or in a mixed connection. The mixed connection means that there are both series and parallel connections in the plurality of battery cells. A plurality of battery cells may be directly connected together in series or in parallel or in a mixed connection, and then a whole composed of the plurality of battery cells may be accommodated within the box body 5; of course, a plurality of battery cells may also be connected in series or in parallel or in a mixed connection to form a battery module 6, and a plurality of battery modules 6 are then connected in series or in parallel or in a mixed connection to form a whole, and the whole is accommodated within the box body 5.

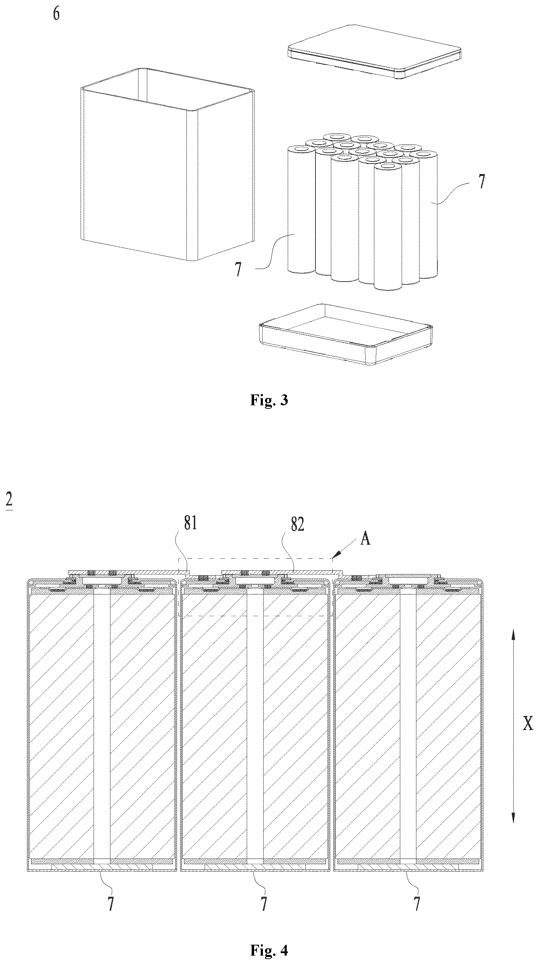

Fig. 3 is an exploded schematic diagram of a battery module shown in Fig. 2.

In some embodiments, as shown in Fig. 3, there are a plurality of battery cells 7, and the a plurality of battery cells 7 are first connected in series or in parallel or in a mixed connection to form a battery module 6. A plurality of battery modules 6 are then connected in series or in parallel or in a mixed connection to form a whole, and the whole is accommodated in the box body.

The plurality of battery cells 7 in the battery module 6 may be electrically connected through a bus component, so as to realize parallel connection, series connection or mixed connection of the plurality of battery cells 7 in the battery module 6.

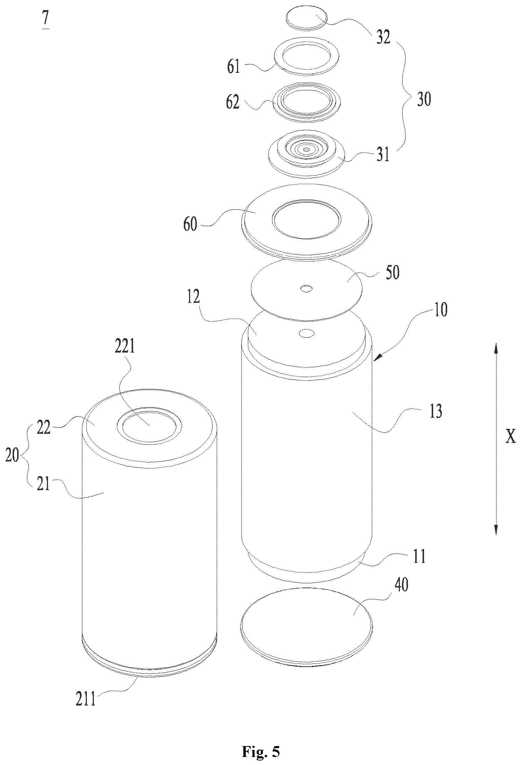

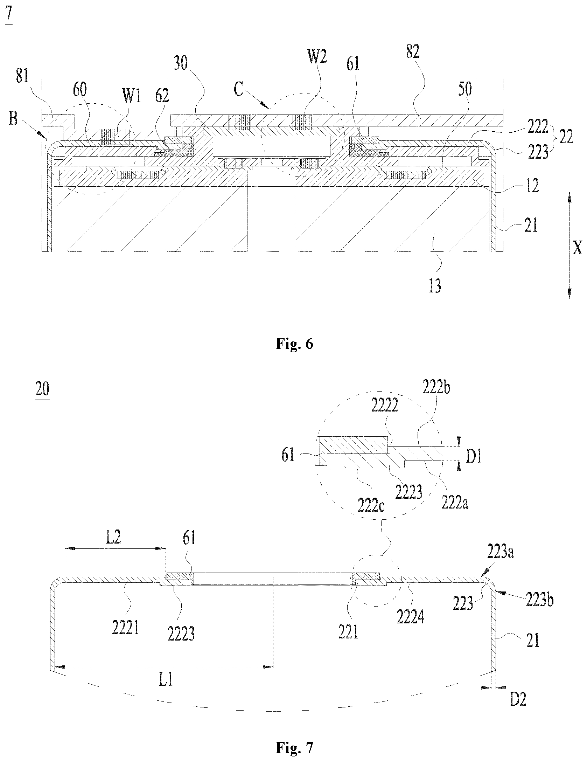

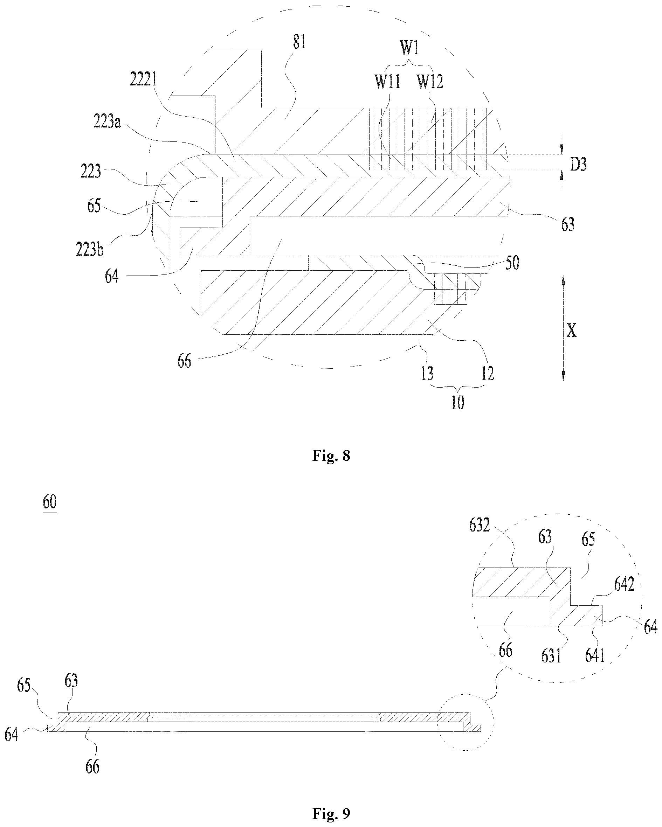

Fig. 4 is a partial cross-sectional schematic diagram of a battery according to some embodiments of the present application; Fig. 5 is an exploded schematic diagram of a battery cell according to some embodiments of the present application; Fig. 6 is an enlarged schematic diagram of the battery shown in Fig. 4 at block A; Fig. 7 is a partial cross-sectional schematic diagram of a casing of a battery cell according to some embodiments of the present application; Fig. 8 is an enlarged schematic diagram of the battery shown in Fig. 6 at circle frame B.

As shown in Fig. 4 to Fig. 8, a battery cell 7 in the embodiments of the present application includes: an electrode assembly 10, including a first tab 11 and a second tab 12 with opposite polarities; a casing 20 for accommodating the electrode assembly 10, wherein the casing 20 includes a cylinder body 21 and a cover body 22 connected to the cylinder body 21, the cylinder body 21 is disposed around an outer periphery of the electrode assembly 10, the cover body 22 is provided with an electrode lead-out hole 221, and at least part of the cover body 22 is used for electrically connecting a first connecting member 81 of the battery 2 and the first tab 11; and an electrode terminal 30 for electrically connecting a second connecting member 82 of the battery 2 and the second tab 12, wherein the electrode terminal 30 is disposed at the cover body 22 in an insulating manner and installed at the electrode lead-out hole 221, one of the cover body 22 and the electrode terminal 30 is a positive output pole of the battery cell 7, and the other is a negative output pole of the battery cell 7.

The electrode assembly 10 includes a first pole piece, a second pole piece, and a separator, and the separator is used to separate the first pole piece and the second pole piece. The polarities of the first pole piece and the second pole piece are opposite, in other words, one of the first pole piece and the second pole piece is a positive pole piece, and the other one of the first pole piece and the second pole piece is a negative pole piece.

The first pole piece, the second pole piece and the separator are all strip structures, and the first pole piece, the second pole piece and the separator are wound into one body and form a winding structure. The winding structure may be a cylindrical structure, a flat structure, or a structure of other shapes.

In terms of a shape of the electrode assembly 10, the electrode assembly 10 includes a main body portion 13, a first tab 11 and a second tab 12, and the first tab 11 and the second tab 12 protrude from the main body portion 13. The first tab 11 is a portion of the first pole piece that is not coated with the active material layer, and the second tab 12 is a portion of the second pole piece that is not coated with the active material layer. The first tab 11 and the second tab 12 are used to lead out a current in the main body portion 13.

The first tab 11 and the second tab 12 may extend from a same side of the main body portion 13, or may extend from two opposite sides respectively.

The first tab 11 and the second tab 12 may be provided on two sides of the main body portion 13 along a first direction X respectively, in other words, the first tab 11 and the second tab 12 are provided at two ends of the electrode assembly 10 along the first direction X respectively.

Optionally, the first tab 11 is wound around a central axis of the electrode assembly 10 for a plurality of turns, and the first tab 11 includes a plurality of turns of tab layers. After the winding is completed, the first tab 11 is generally cylindrical, and a gap is left between two adjacent tab layers. In the embodiments of the present application, the first tab 11 may be processed to reduce the gap between tab layers, so as to facilitate a connection of the first tab 11 with other conductive structures. For example, in the embodiments of the present application, the first tab 11 may be kneaded and flattened, to enable end regions of the first tab 11 away from the main body portion 13 to be gathered up and assembled together; kneading and flattening process forms a dense end surface at an end of the first tab 11 away from the main body portion 13, reduces the gap between tab layers, and facilitates the connection of the first tab 11 with other conductive structures. Alternatively, in the embodiments of the present application, conductive material may also be filled between two adjacent turns of tab layers, so as to reduce the gap between tab layers.

Optionally, the second tab 12 is wound around the central axis of the electrode assembly 10 for a plurality of turns, and the second tab 12 includes a plurality of turns of tab layers. Exemplarily, the second tab 12 is also subjected to a kneading and flattening process to reduce a gap between tab layers of the second tab 12.

The casing 20 is a hollow structure, and a space for accommodating the electrode assembly 10 is formed inside the casing 20. A shape of the casing 20 may be determined based on a specific shape of the electrode assembly 10. For example, if the electrode assembly 10 has a cylindrical structure, then a cylindrical casing may be selected; if the electrode assembly 10 has a cuboid structure, then a cuboid casing may be selected. Optionally, both the electrode assembly 10 and the casing 20 are cylinders; correspondingly, the cylinder body 21 is a cylinder, and the cover body 22 is a circular plate-like structure.

The cover body 22 is electrically connected to the cylinder body 21, and the cover body 22 and the cylinder body 21 may have the same polarity.

The cover body 22 and the cylinder body 21 may be formed as an integral structure, that is, the casing 20 is an integrally formed member. Of course, the cover body 22 and the cylinder body 21 may also be two members provided separately, and then connected together by means of welding, riveting, bonding, or the like.

The casing 20 is a hollow structure with one end open. Specifically, the cylinder body 21 has an opening 211 at one end away from the cover body 22. The battery cell 7 further includes a cover plate 40, and the cover plate 40 covers the opening of the cylinder body 21 to close the opening 211 of the cylinder body 21. The cover plate 40 may be of various structures, for example, the cover plate 40 is a plate-like structure.

The electrode lead-out hole 221 penetrates through the cover body 22, so that electric energy in the electrode assembly 10 can be led out to the outside of the casing 20. Exemplarily, the electrode lead-out hole 221 penetrates through the cover body 22 along the first direction X.

The central axis of the electrode assembly 10 is a virtual straight line, which is parallel to the first direction X. The central axis of the electrode assembly 10 may pass through the electrode lead-out hole 221, or may arranged to be staggered from the electrode lead-out hole 221, which is not limited in the embodiments.

The first tab 11 is electrically connected to the cover body 22. The first tab 11 may be electrically connected to the cover body 22 directly, or may be electrically connected to the cover body 22 indirectly through other conductive structures. For example, the first tab 11 may be electrically connected to the cover body 22 through the cylinder body 21.

The second tab 12 is electrically connected to the electrode terminal 30. The second tab 12 may be electrically connected to the electrode terminal 30 directly, or may be electrically connected to the electrode terminal 30 indirectly through other conductive structures.

The electrode terminal 30 is disposed at the cover body 22 in an insulating manner. Therefore, the electrode terminal 30 and the cover body 22 may have different polarities, and the electrode terminal 30 and the cover body 22 may be used as different output poles.

The electrode terminal 30 is fixed to the cover body 22. The electrode terminal 30 may be integrally fixed outside the cover body 22, or may extend into an inner portion of the casing 20 through the electrode lead-out hole 221.

Under a condition that the first tab 11 is a negative pole tab and the second tab 12 is a positive pole tab, the cover body 22 is the negative output pole of the battery cell 7, and the electrode terminal 30 is the positive output pole of the battery cell 7. Under a condition that the first tab 11 is a positive pole tab and the second tab 12 is a negative pole tab, the cover body 22 is the positive output pole of the battery cell 7, and the electrode terminal 30 is the negative output pole of the battery cell 7.

In the battery 2, the plurality of battery cells 7 are electrically connected through the bus component. The bus component includes a first connecting member 81 and a second connecting member 82, the first connecting member 81 is used for connecting to the cover body 22 of the battery cell 7, and the second connecting member 82 is used for connecting to the electrode terminal 30 of the battery cell 7.

The first connecting member 81 may be connected to the cover body 22 by welding, bonding or other means, so as to realize an electrical connection between the first connecting member 81 and the cover body 22. The second connecting member 82 may be connected to the electrode terminal 30 by welding, bonding, riveting or other means, so as to realize an electrical connection between the second connecting member 82 and the electrode terminal 30.

Exemplarily, the first connecting member 81 connects the cover body 22 of one battery cell 7 and the electrode terminal 30 of another battery cell 7, and the second connecting member 82 connects the electrode terminal 30 of the one battery cell 7 and the cover body 22 of yet another battery cell 7, so that the first connecting member 81 and the second connecting member 82 connect three battery cells 7 in series.

In the embodiments, by using the cover body 22 and the electrode terminal 30 as output poles, the structure of the battery cell 7 can be simplified, and the ability of allowing current to pass through of the battery cell 7 can be ensured. The cover body 22 and the electrode terminal 30 are located at a same end of the battery cell 7, so that the first connecting member 81 and the second connecting member 82 can be assembled on a same side of the battery cell 7, which can simplify an assembly process and improve an efficiency of assembling a plurality of battery cells 7 into a group.

In some embodiments, the cover body 22 and the cylinder body 21 are formed as an integral structure. In this way, a connection process of the cover body 22 and the cylinder body 21 can be omitted. The casing 20 may be formed by a stretching process.

The electrode lead-out hole 221 of the embodiments of the present application is made after the casing 20 is stretched and formed.

The inventors tried to roll an open end of the casing, to enable the open end of the casing to be folded inward to form a flanging structure, and the flanging structure presses the cover plate to realize a fixing of the cover plate. The inventors installed the electrode terminal on the cover plate, and used the flanging structure and the electrode terminal as two output poles of the battery cell. However, the larger a size of the flanging structure, the higher a risk of curling and wrinkling of the flanging structure after forming; if the flanging structure is curled and wrinkled, it will cause a surface of the flanging structure to be uneven, and under a condition that the flanging structure is welded to an outer connecting member, there will be a problem of poor welding. Therefore, the size of the flanging structure is relatively limited, resulting in insufficient ability of allowing current to pass through of the battery cell.

The embodiments utilize a process of perforating to form the electrode lead-out hole 221 for installing the electrode terminal 30 on the cover body 22, to arrange the positive output pole and the negative output pole at one end of the battery cell 7 away from the opening of the casing 20; the cover body 22 is formed during a process of forming the casing 20, and after arranging the electrode lead-out hole 221, a flatness can be ensured, which ensures a connection strength between the cover body 22 and the first connecting member 81. At the same time, the flatness of the cover body 22 is not restricted by its own size, so the cover body 22 can have a relatively large size, thereby improving the ability of allowing current to pass through of the battery cell 7.

In some embodiments, the cover body 22 includes a connecting portion 222 and a bending portion 223, the electrode lead-out hole 221 is provided on the connecting portion 222, at least a portion of the connecting portion 222 is used for connecting the first connecting member 81 and the first tab 11, and the bending portion 223 is used for connecting the cylinder body 21 and the connecting portion 222.

The embodiments do not limit a thickness of the connecting portion 222, a thickness of the bending portion 223 and a wall thickness of the cylinder body 21, and the thicknesses of the three may be determined based on requirements.

The connecting portion 222 is an annular plate-like structure, which extends along a circumferential direction of the electrode lead-out hole 221 to surround the electrode lead-out hole 221. The connecting portion 222 having a plate-like structure may fit with the first connecting member 81 in a better way, thereby ensuring a connection strength and a current passing through area between the two.

The first connecting member 81 may be connected to the connecting portion 222 by welding, bonding or other means, so as to realize the electrical connection between the first connecting member 81 and the cover body 22.

In the embodiments of the present application, the bending portion 223 may release stress during the process of forming the casing 20, reduce stress concentration, and reduce a risk of breaking of the casing 20.

In some embodiments, the connecting portion 222 includes a main body portion 2221 and a first concave portion 2222, the main body portion 2221 is disposed around an outer periphery of the first concave portion 2222, the main body portion 2221 is used for connecting the first connecting member 81 and the first tab 11, the first concave portion 2222 is recessed from an outer surface 222b of the main body portion in a direction facing the electrode assembly 10, the electrode lead-out hole 221 penetrates a bottom wall of the first concave portion 2222, and communicates the first concave portion 2222 with the inner portion of the casing 20. The battery cell 7 further includes a first insulating member 61, the first concave portion 2222 is configured to accommodate at least a portion of the first insulating member 61, and a portion of the first insulating member 61 that is accommodated within the first concave portion 2222 is attached to a side wall and/or the bottom wall of the first concave portion 2222.

The main body portion 2221 has an inner surface 222a and an outer surface 222b oppositely disposed along its thickness direction, and the inner surface 222a of the main body portion faces the electrode assembly 10. The outer surface 222b of the main body portion may be flat, so as to be connected with the first connecting member 81 in a fit manner.

The electrode terminal 30 is fixed to the connecting portion 222. Exemplarily, the bottom wall of the first concave portion 2222 may be used to cooperate with the electrode terminal 30 to fix the electrode terminal 30.

The first insulating member 61 serves to insulate and separate at least part of the electrode terminal 30 from the connecting portion 222. Exemplarily, at least a portion of the first insulating member 61 is sandwiched between the bottom wall of the first concave portion 2222 and the electrode terminal 30 to insulate and separate the bottom wall of the first concave portion 2222 and the electrode terminal 30 to reduce a risk of short circuit.

In the embodiments, a portion of the first insulating member 61 may be accommodated within the first concave portion 2222, or the entire first insulating member 61 may be accommodated within the first concave portion 2222.

The portion of the first insulating member 61 that is accommodated within the first concave portion 2222 may only be attached to the side wall of the first concave portion 2222, may only be attached to the bottom wall of the first concave portion 2222, or may be attached to both the bottom wall and the side wall of the first concave portion 2222.

The term "attach" refers to attaching and contacting two members, and the two members may be attached and fixed, or only attached but not fixed. For example, the electrode terminal 30 and the bottom wall of the first concave portion 2222 sandwich the portion of the first insulating member 61 that is accommodated within the first concave portion 2222 from both sides, and the portion of the first insulating member 61 that is accommodated within the first concave portion 2222 is attached to the bottom wall of the first concave portion 2222 under an action of a clamping force. Of course, the portion of the first insulating member 61 that is accommodated within the first concave portion 2222 may also be attached to the bottom wall of the first concave portion 2222 by adhesive.

In the embodiments, by arranging the first concave portion 2222, the first insulating member 61 can be positioned, thereby simplifying the assembly process. The first concave portion 2222 can accommodate at least a portion of the first insulating member 61, which can reduce a size of the first insulating member 61 protruding from the outer surface 222b of the main body portion, thereby reducing a maximum size of the battery cell 7 and improving an energy density.

In some embodiments, the outer surface 222b of the main body portion is exposed, and is not covered by the electrode terminal 30 and the first insulating member 61.

In some embodiments, a thickness of the main body portion 2221 is greater than the wall thickness of the cylinder body 21.

The main body portion 2221 is used for connecting with the first connecting member 81, so the main body portion 2221 needs to have a relatively large thickness to ensure a connection strength between the main body portion 2221 and the first connecting member 81. In addition, the main body portion 2221 having a relatively large thickness may support components such as the electrode terminal 30 in a better way. The cylinder body 21 mainly separates the electrode assembly 10 from the outside, and may have a relatively small thickness to reduce an overall weight of the battery cell 7.

Exemplarily, the main body portion 2221 is welded to the first connecting member 81. If the thickness of the main body portion 2221 is relatively small, then the main body portion 2221 is easily melted through during a welding process; therefore, the main body portion 2221 in the embodiments of the present application has a relatively large thickness.

In some embodiments, a difference between the thickness D1 of the main body portion 2221 and the wall thickness D2 of the cylinder body 21 satisfies: 0.1 mm≤D1-D2≤2 mm.

If D1-D2 is less than 0.1 mm, then the thickness of the main body portion 2221 is too small or the thickness of the cylinder body 21 is too large. If the thickness of the main body portion 2221 is too small, this may cause an insufficient strength of the main body portion 2221, and if the thickness of the cylinder body 21 is too large, this may cause an excessive large weight of the cylinder body 21, which will affect the energy density.

The casing 20 is typically stretched from a flat plate. If D1-D2 is greater than 2 mm, then during the stretching process, a difference between a stretching amount of the main body portion 2221 and a stretching amount of the cylinder body 21 is too large, and the cylinder body 21 is easily damaged during the stretching process.

Therefore, the embodiments of the present application makes D1 and D2 satisfy: 0.1 mm≤D1-D2≤2 mm.

Optionally, a value of D1-D2 is 0.1 mm, 0.2 mm, 0.3 mm, 0.5 mm, 0.8 mm, 1 mm, 1.2 mm, 1.5 mm, 1.8 mm or 2 mm.

In some embodiments, the cylinder body 21 is cylindrical, the electrode lead-out hole 221 is a circular hole, and a central axis of the cylinder body 21 and a central axis of the electrode lead-out hole 221 are arranged to overlap.

The expression "arranged to overlap" does not require that the central axis of the cylinder body 21 and the central axis of the electrode lead-out hole 221 are absolutely completely coincident, and there may be a deviation allowed by the process.

The electrode lead-out hole 221 is used to limit a position of the electrode terminal 30, and the central axis of the electrode lead-out hole 221 and the central axis of the cylinder body 21 are arranged to overlap in the embodiments, so that at least part of the electrode terminal 30 can be located at a central position of the cover body 22. In this way, under a condition that a plurality of battery cells 7 are assembled into a group, requirements on an accuracy of a position of the electrode terminal 30 can be reduced, the assembly process can be simplified, and an assembly efficiency can be improved.

In some embodiments, am inner radius L1 of the cylinder body 21 and a width L2 of the main body portion 2221 satisfy: 0.2≤L2/L1≤0.8, and the width L2 of the main body portion 2221 is a difference between an outer radius of the main body portion 2221 and an inner radius of the main body portion 2221.

The main body portion 2221 is a ring structure, and the width L2 is a ring width of the ring structure.

The electrode assembly 10 is generally a cylindrical structure, and the inner radius L1 of the cylinder body 21 is positively correlated with a radius of the electrode assembly 10. The larger a value of L1, the larger a volume and capacity of the electrode assembly 10, and the higher a requirement of the battery cell 7 for the ability of allowing current to pass through.

The width L2 of the main body portion 2221 and a radius of the electrode lead-out hole 221 are both related to the ability of allowing current to pass through of the battery cell 7. The larger a value of the width L2, the larger a connection area between the first connecting member 81 and the main body portion 2221, and the higher the ability of allowing current to pass through between the first connecting member 81 and the main body portion 2221. The radius of the electrode lead-out hole 221 directly affects a current passing through area of the electrode terminal 30, and also affects the ability of allowing current to pass through between the electrode terminal 30 and the second connecting member 82 correspondingly. All in all, both the width L2 of the main body portion 2221 and the radius of the electrode lead-out hole 221 will affect the ability of allowing current to pass through of the battery cell 7.

However, on the premise that the inner radius L1 of the cylinder body 21 is constant, the width L2 of the main body portion 2221 is negatively correlated with the radius of the electrode lead-out hole 221. If the width L2 of the main body portion 2221 is too small, this will cause that the ability of allowing current to pass through of the main body portion 2221 is insufficient; if the width L2 of the main body portion 2221 is too large, this will cause that the radius of the electrode lead-out hole 221 is too small, and the ability of allowing current to pass through of the electrode terminal 30 is insufficient.. Through experiments, the inventors found that when the inner radius L1 of the cylinder body 21 and the width L2 of the main body portion 2221 satisfy: 0.2≤L2/L1≤0.8, the ability of allowing current to pass through of the main body portion 2221 and the ability of allowing current to pass through of the electrode terminal 30 can be balanced in a better way, to meet the requirements for the overcurrent capacity of the battery cell 7.

In some embodiments, the inner radius L1 of the cylinder body 21 and the width L2 of the main body portion 2221 satisfy: 0.3≤L2/L1≤0.7.

Optionally, a value of L2/L1 is 0.3, 0.4, 0.5, 0.6 or 0.7.

In some embodiments, the main body portion 2221 is used for welding with the first connecting member 81 and a first welding area W11 is formed on the main body portion 2221, the first welding area W11 is disposed to be spaced apart from a first end portion 223a of the bending portion 223, and the first end portion 223a is used for connecting the main body portion 2221.

The main body portion 2221 is welded with the first connecting member 81 to form a first welded portion W1. Exemplarily, during welding, a laser acts on a surface of the first connecting member 81 away from the main body portion 2221, and the laser fuses and connects a portion of the first connecting member 81 and a portion of the main body portion 2221 to form the first welding portion W1.

The first welding portion W 1 includes the first welding area W11 formed on the main body portion 2221 and a second welding area W12 formed on the first connecting member 81.

The bending portion 223 includes the first end portion 223a and a second end portion 223b disposed opposite to each other, the first end portion 223a is used for connecting to the main body portion 2221, and the second end portion 223b is used for connecting to the cylinder body 21. The bending portion 223 is in a bent state as a whole, and its inner surface and outer surface are generally curved surfaces.

In the embodiments of the present application, the first welding area W11 is disposed to be spaced apart from the first end portion 223a of the bending portion 223, to reduce a risk of being welded to the bending portion 223 in the welding process due to a process error, thereby reducing a possibility of virtual welding and ensuring a connection strength between the main body portion 2221 and the first connection member 81.

In some embodiments, a welding depth D3 of the first welding area W 11 and the thickness D1 of the main body portion 2221 satisfy: 0.1≤D3/D1≤0.8.

The welding depth D3 refers to a dimension of the first welding area W11 in a thickness direction of the main body portion 2221.

The smaller a value of D3/D1, the smaller a portion that the main body portion 2221 needs to melt during welding, and the lower a power required for welding; on the contrary, the larger the value of D3/D1, the larger the portion that the main body portion 2221 needs to melt during welding, the higher the power required for welding.

If the value of D3/D1 is too small, then a volume of the first welding area W11 is too small, which will lead to insufficient connection strength and low ability of allowing current to pass through between the main body portion 2221 and the first connecting member 81. Therefore, in the embodiments, the value of D3/D1 is set to be greater than or equal to 0.1, so as to ensure the connection strength and the ability of allowing current to pass through between the main body portion 2221 and the first connecting member 81.

If the value of D3/D1 is too large, then the power required for welding is also high, and a high temperature generated during welding is likely to burn other members, such as a second insulating member described later. In addition, if the value of D3/D1 is too large, a risk of the main body portion 2221 being melted through will also increase, and after the main body portion 2221 is melted through, it is more likely to burn other members in the casing 20. Therefore, in the embodiments of the present application, the value of D3/D1 is set to be less than or equal to 0.8, so as to reduce a temperature during welding and reduce a risk of burning other members.

Optionally, the value of D3/D1 is 0.2, 0.3, 0.4, 0.5, 0.6 or 0.7.

In some embodiments, a convex portion 2223 protruding from the inner surface 222a of the main body portion in the direction facing the electrode assembly 10 is formed at a position on the connecting portion 222 opposite to the first concave portion 2222. The connecting portion 222 further includes a fourth concave portion 2224, which is recessed from a top end surface 222c of the convex portion 2223 to the inner surface 222a of the main body portion in the direction away from the electrode assembly 10. The battery cell 7 further includes a second insulating member 60, the fourth concave portion 2224 is configured to accommodate at least part of the second insulating member 60, and the part of the second insulating member 60 that is accommodated within the fourth concave portion 2224 is attached to a side wall and/or a bottom wall of the fourth concave portion 2224.

The first concave portion 2222 and the convex portion 2223 may be formed by punching the cover body 22.

The top end surface 222c of the convex portion 2223 is a surface of the convex portion 2223 facing the electrode assembly 10. The fourth concave portion 2224 is an annular concave portion disposed around the convex portion 2223. A bottom surface of the fourth concave portion 2224 is the inner surface 222a of the main body portion.

The portion of the second insulating member 60 that is accommodated within the fourth concave portion 2224 may only be attached to a side wall of the fourth concave portion 2224, may only be attached to a bottom wall of the fourth concave portion 2224, or may be attached to both the side wall and the bottom wall of the fourth concave portion 2224.

In the embodiments, by arranging the convex portion 2223, a thickness of the bottom wall of the first concave portion 2222 can be increased, so as to improve a strength of the bottom wall of the first concave portion 2222, so that the bottom wall of the first concave portion 2222 can effectively support the electrode terminal 30. The second insulating member 60 can cover the main body portion 2221 from the inside to separate the electrode assembly 10 from the main body portion 2221, thereby reducing a risk of contact and conduction between the electrode assembly 10 and the main body portion 2221 when the battery cell 7 vibrates, and improving a safety performance. By arranging the fourth concave portion 2224, the second insulating member 60 can be positioned, thereby simplifying the assembly process. The fourth concave portion 2224 can accommodate at least part of the second insulating member 60, so that an inner space of the casing 20 can be fully utilized and the energy density can be improved.

In some embodiments, one of the first insulating member 61 and the second insulating member 60 is used to seal the electrode lead-out hole 221. In other embodiments, the battery cell 7 further includes a sealing ring 62. The sealing ring 62 is sleeved on the electrode terminal 30 and used to seal the electrode lead-out hole 221. Optionally, a portion of the sealing ring 62 extends into the electrode lead-out hole 221 to separate a hole wall of the electrode lead-out hole 221 from the electrode terminal 30.

In some embodiments, the bending portion 223 includes the first end portion 223a for connecting to the connecting portion 222 and the second end portion 223b for connecting to the cylinder body 21, and in a direction from the first end portion 223a to the second end portion 223b, the thickness of the bending portion 223 gradually decreases.

A thickness of the first end portion 223a of the bending portion 223 is equal to the thickness of the main body portion 2221, and a thickness of the second end portion 223b of the bending portion 223 is equal to the thickness of the cylinder body 21.

The embodiments of the present application enables the thickness of the bending portion 223 to change gradually, so as to adapt to a thickness difference between the connecting portion 222 and the cylinder body 21, to smoothly connect the cylinder body 21 and the connecting portion 222, which reduces a risk that an inner surface and an outer surface of the casing 20 form a step, and reduces stress concentration.

In some embodiments, the second tab 12 is provided at one end of the electrode assembly 10 facing the cover body 22, and the first tab 11 is provided at the other end of the electrode assembly 10 away from the cover body 22. The cylinder body 21 is used for connecting the first tab 11 and the cover body 22, to enable the first tab 11 to be electrically connected to the cover body 22.

The cylinder body 21 may be electrically connected to the first tab 11 directly, or may be electrically connected to the first tab 11 through other components. For example, the first tab 11 is electrically connected to the cylinder body 21 through the cover plate 40.

In the embodiments of the present application, the first tab 11 and the second tab 12 are provided at two ends of the electrode assembly 10, which can reduce a risk of conduction between the first tab 11 and the second tab 12, and increase a current passing through area of the first tab 11 and a current passing through area of the second tab 12.

In some embodiments, the first tab 11 is a negative pole tab, and a base material of the casing 20 is steel.

The casing 20 is electrically connected to the negative pole tab, that is, the casing 20 is in a low potential state. The casing 20 made of steel is not easily corroded by electrolyte in a low potential state, so as to reduce safety risks.

In some embodiments, the battery cell 7 further includes a current-collecting member 50 for connecting the second tab 12 and the electrode terminal 30.

The current-collecting member 50 may be connected to the second tab 12 by welding, abutting or bonding, etc., and may be connected to the electrode terminal 30 by welding, abutting, bonding, riveting, etc., thereby realizing an electrical connection between the second tab 12 and the electrode terminal 30.

In the first direction X, the electrode terminal 30 is disposed opposite to a middle region of the second tab 12. If the electrode terminal 30 and the second tab 12 are directly connected, then this will cause that a conductive path between an edge region of the second tab 12 and the electrode terminal 30 is too long, resulting in an uneven current density of the second pole piece of the electrode assembly 10, which increases an internal resistance, and affects the ability of allowing current to pass through and charging efficiency of the battery cell 7.

The current-collecting member 50 and the second tab 12 in the embodiments of the present application may have a relatively large connection area, and a current of the second tab 12 may be collected into the electrode terminal 30 through the current-collecting member 50, so that the current-collecting member 50 can reduce a difference of conductive paths between different regions of the second tab 12 and the electrode terminal 30, which improves the evenness of the current density of the second pole piece, reduces the internal resistance, and improves the ability of allowing current to pass through and charging efficiency of the battery cell 7..

Fig. 9 is a structural schematic diagram of a second insulating member of a battery cell according to some embodiments of the present application.

As shown in Figs. 8 and 9, in some embodiments, the battery cell 7 further includes the second insulating member 60, the second insulating member 60 includes an insulating body 63 and an insulating protrusion 64 protruding from an outer periphery of the insulating body 63, the insulating body 63 abuts on a side of the main body portion 2221 facing the electrode assembly 10, the insulating protrusion 64 is arranged on a side of the bending portion 223 facing the electrode assembly 10, a surface of the insulating protrusion 64 away from the electrode assembly 10 is closer to the electrode assembly 10 than a surface of the insulating body 63 away from the electrode assembly 10, so as to form a second concave portion 65 for avoiding the bending portion 223.

The insulating body 63 has an inner surface and an outer surface disposed opposite to each other, and the inner surface 631 of the insulating body faces the electrode assembly 10. The insulating protrusion 64 has an inner surface and an outer surface disposed opposite to each other, and the inner surface 641 of the insulating protrusion faces the electrode assembly 10. In the first direction X, the outer surface 642 of the insulating protrusion is closer to the electrode assembly 10 than the outer surface 632 of the insulating body.

In the thickness direction of the main body portion 2221, the insulating body 63 and the main body portion 2221 at least partially overlap, and the insulating protrusion 64 and the bending portion 223 at least partially overlap.

The insulating protrusion 64 is an annular structure surrounding an outer side of the insulating body 63. The second concave portion 65 surrounds the outer side of the insulating body 63.

The insulating body 63 abuts against a surface of the main body portion 2221 facing the electrode assembly 10, and covers the first welding area W11. When welding the first connecting member 81 and the main body portion 2221, if the main body portion 2221 is melted through due to an operation error, the insulating body 63 can function as a stopper, which reduces a risk of welding beads falling to the electrode assembly 10, and reduces safety hazards.

In the embodiments, the insulating body 63 can separate at least a portion of the main body portion 2221 from the electrode assembly 10, and the insulating protrusion 64 can separate at least part of the bending portion 223 from the electrode assembly 10, so that when the battery cell 7 vibrates, a risk of the electrode assembly 10 coming into contact with the main body portion 2221 and a risk of the electrode assembly 10 coming into contact with the bending portion 223 can reduced in the embodiments, thereby improving the safety performance. In the embodiments, the second concave portion 65 is provided to avoid the bending portion 223 to avoid interference between the bending portion 223 and the second insulating member 60.

In some embodiments, the insulating protrusion 64 extends beyond a second end portion 223b of the bending portion 223 in the direction facing the electrode assembly 10, and the second end portion 223b is used for connecting the cylinder body 21.

In the first direction X, the outer surface 642 of the insulating protrusion is closer to the electrode assembly 10 than the second end portion 223b.

In the embodiments, the outer surface 642 of the insulating protrusion can be spaced from an inner surface of the bending portion 223 to avoid interference between the insulating protrusion 64 and the bending portion 223. A size of the insulating protrusion 64 protruding from the insulating body 63 is not affected by the bending portion 223, so that an isolation effect of the insulating protrusion 64 can be improved.

In some embodiments, the inner surface 641 of the insulating protrusion is flush with the inner surface 631 of the insulating body.

In some embodiments, the inner surface 631 of the insulating body is formed with a third concave portion 66 recessed in the direction away from the electrode assembly 10, and at least part of the electrode terminal 30 is accommodated within the third concave portion 66.

In the embodiments, by arranging the third concave portion 66, a space occupied by the second insulating member 60 and the electrode terminal 30 can be reduced, so as to improve the energy density of the battery cell 7.

In some embodiments, a thickness of the insulating body 63 is greater than the thickness of the main body portion 2221.

When the main body portion 2221 and the first connecting member 81 are welded, heat will be transferred to the insulating body 63. In the embodiments, the thickness of the insulating body 63 is larger than the thickness of the main body portion 2221, so as to prolong a heat transfer path and reduce an influence of heat on other components. The insulating body 63 in the embodiments has a relatively large thickness, so that even if a portion of the insulating body 63 close to the first welding area W11 is burned, an insulating effect can be ensured.

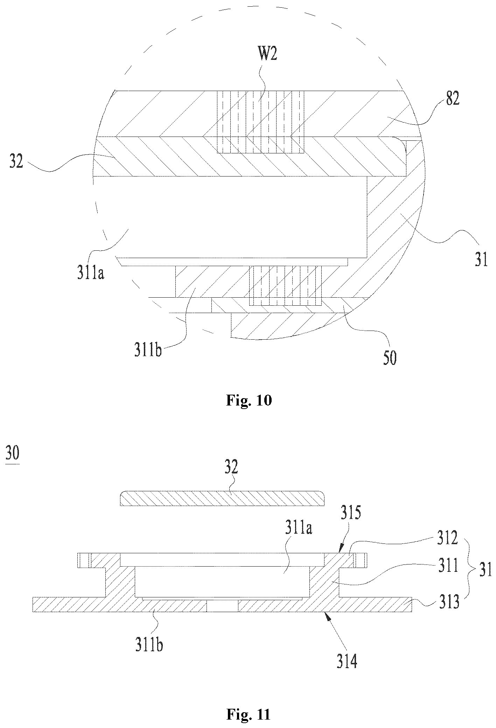

Fig. 10 is an enlarged schematic diagram of the battery shown in Fig. 6 at circle frame C; Fig. 11 is a structural schematic diagram of an electrode terminal of a battery cell according to some embodiments of the present application.

As shown in Figs. 10 and 11, the electrode terminal 30 includes a terminal body 31, the terminal body 31 includes a columnar portion 311, a first limiting portion 312 and a second limiting portion 313, at least a portion of the columnar portion 311 is located within the electrode lead-out hole 221, both the first limiting portion 312 and the second limiting portion 313 are connected to and protrude from an outer side wall of the columnar portion 311, the first limiting portion 312 and the second limiting portion 313 are respectively disposed on an outer side and an inner side of the connecting portion in the first direction X, and are used for clamping a portion of the connecting portion.

The terminal body 31 has an inner surface and an outer surface disposed opposite to each other, and the inner surface 314 of the terminal body faces the electrode assembly 10. The columnar portion 311 is provided with a fifth concave portion 311a which is recessed from the outer surface 315 of the terminal body in the direction facing the electrode assembly 10. A bottom of the fifth concave portion 311a forms an adapter portion 311b for welding to the current-collecting member 50.

Under a condition that the electrode assembly and the current-collecting member 50 are installed into the casing through the opening of the cylindrical body, and after the current-collecting member 50 is pressed against the adapter portion 311b, external welding equipment can weld the adapter portion 311b and the current-collecting member 50 on one side of the adapter portion 311b away from the current-collecting member 50.

In the embodiments, a thickness of the adapter portion 311b is reduced by arranging the fifth concave portion 311a, so that a welding power required for welding the adapter portion 311b and the current-collecting member 50 can be reduced, which reduces heat generation, and reduces a risk of burning other components (such as the first insulating member and the second insulating member).

In some embodiments, the electrode terminal 30 further includes a sealing plate 32, and the sealing plate 32 is used for closing an opening of the fifth concave portion 311a. The sealing plate 32 may be located entirely outside the fifth concave portion 311a, or may be partially accommodated within the fifth concave portion 311a, as long as the sealing plate 32 can close the opening of the fifth concave portion 311a. The sealing plate 32 can protect the adapter portion 311b from the outside, reduce external impurities entering the fifth concave portion 311a, reduce a risk of the adapter portion 311b being damaged by external impurities, and improve a sealing performance of the battery cell 7.

In some embodiments, the fifth concave portion 311a is a stepped concave portion, and at least part of the sealing plate 32 is accommodated within the fifth concave portion 311a and supported by a stepped surface of the fifth concave portion 311a.

In some embodiments, the sealing plate 32 is used for welding with the second connecting member 82 and a second welding portion W2 is formed. The second welding portion W2 can reduce a contact resistance between the sealing plate 32 and the second connecting member 82 and improve the ability of allowing current to pass through.

In some embodiments, at least part of the sealing plate 32 protrudes from the outer surface 315 of the terminal body.

Under a condition that the second connecting member 82 and the sealing plate 32 need to be welded, the second connecting member 82 is first attached to an upper surface of the sealing plate 32 (that is, an outer surface of the sealing plate 32 away from the adapter portion 311b), and then the second connecting member 82 and the sealing plate 32 are welded.

At least part of the sealing plate 32 protrudes from the outer surface 315 of the terminal body, so as to prevent the outer surface 315 of the terminal body from interfering with the attaching of the sealing plate 32 and the second connecting member 82, thereby ensuring that the second connecting member 82 and the sealing plate 32 are attached closely.

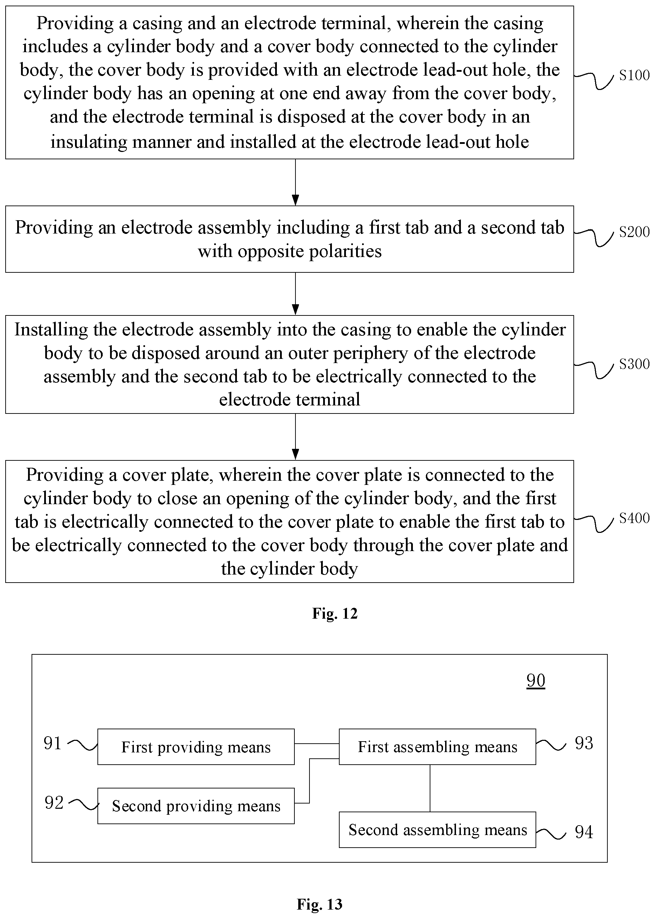

Fig. 12 is a schematic flowchart of a method for manufacturing a battery cell according to some embodiments of the present application.

As shown in Fig. 12, the method for manufacturing a battery cell according to some embodiments of the present application includes:
S100. providing a casing and an electrode terminal, wherein the casing includes a cylinder body and a cover body connected to the cylinder body, the cover body is provided with an electrode lead-out hole, the cylinder body has an opening at one end away from the cover body, and the electrode terminal is disposed at the cover body in an insulating manner and installed at the electrode lead-out hole;
S200. providing an electrode assembly including a first tab and a second tab with opposite polarities;
S300. installing the electrode assembly into the casing to enable the cylinder body to be disposed around an outer periphery of the electrode assembly and the second tab to be electrically connected to the electrode terminal;
S400. providing a cover plate, wherein the cover plate is connected to the cylinder body to close an opening of the cylinder body, and the first tab is electrically connected to the cover plate to enable the first tab to be electrically connected to the cover body through the cover plate and the cylinder body;
wherein, at least part of the cover body is used for electrically connecting the first connecting member of the battery and the first tab, the electrode terminal is used for electrically connecting the second connecting member of the battery and the second tab, one of the cover body and the electrode terminal is a positive output pole of the battery cell, and the other is a negative output pole of the battery cell.

It should be noted that, for a related structure of a battery cell manufactured by the above-mentioned method for manufacturing a battery cell, reference may be made to the battery cell provided in the above-mentioned embodiments.

When assembling a battery cell based on the above-mentioned method for manufacturing a battery cell, it is not necessary to carry out the above-mentioned steps in sequence, that is, the steps may be carried out in an order mentioned in the embodiments, or in an order different from that mentioned in the embodiments, or several steps may be performed simultaneously. For example, the execution of steps S100 and S200 is in no particular order, and may also be performed simultaneously.

Fig. 13 is a schematic block diagram of a system for manufacturing a battery cell according to some embodiments of the present application.

As shown in Fig. 13, the system 90 for manufacturing a battery cell according to some embodiments of the present application includes:
a first providing means 91 for providing a casing and an electrode terminal, wherein the casing includes a cylinder body and a cover body connected to the cylinder body, the cover body is provided with an electrode lead-out hole, the cylinder body has an opening at one end away from the cover body, and the electrode terminal is disposed at the cover body in an insulating manner and installed at the electrode lead-out hole;
a second providing means 92 for providing an electrode assembly including a first tab and a second tab with opposite polarities;
a first assembling means 93 for installing the electrode assembly into the casing to enable the cylinder body to be disposed around an outer periphery of the electrode assembly and the second tab to be electrically connected to the electrode terminal;
a second assembling means 94 for providing a cover plate, wherein the cover plate is connected to the cylinder body to close an opening of the cylinder body, and the first tab is electrically connected to the cover plate to enable the first tab to be electrically connected to the cover body through the cover plate and the cylinder body;
wherein, at least part of the cover body is used for electrically connecting the first connecting member of the battery and the first tab, the electrode terminal is used for electrically connecting the second connecting member of the battery and the second tab, one of the cover body and the electrode terminal is a positive output pole of the battery cell, and the other is a negative output pole of the battery cell.

For a related structure of a battery cell manufactured by the above-mentioned system for manufacturing a battery cell, reference may be made to the battery cell provided in the above-mentioned embodiments.

Further embodiments of the present invention are provided in the following. It should be noted that the numbering used in the following section does not necessarily need to comply with the numbering used in the previous sections.

Embodiment 1. A battery cell for use in a battery, comprising:
an electrode assembly, comprising a first tab and a second tab with opposite polarities;
a casing for accommodating the electrode assembly, wherein the casing comprises a cylinder body and a cover body connected to the cylinder body, the cylinder body is disposed around an outer periphery of the electrode assembly, the cover body is provided with an electrode lead-out hole, and at least part of the cover body is used for electrically connecting a first connecting member of the battery and the first tab; and
an electrode terminal for electrically connecting a second connecting member of the battery and the second tab, wherein the electrode terminal is disposed at the cover body in an insulating manner and installed at the electrode lead-out hole, one of the cover body and the electrode terminal is a positive output pole of the battery cell, and the other is a negative output pole of the battery cell.

Embodiment 2. The battery cell according to Embodiment 1, wherein the cover body and the cylinder body are formed as an integral structure.

Embodiment 3. The battery cell according to Embodiment 1 or 2, wherein the cover body comprises a connecting portion and a bending portion, the electrode lead-out hole is provided on the connecting portion, at least a portion of the connecting portion is used for connecting the first connecting member and the first tab, and the bending portion is used for connecting the cylinder body and the connecting portion.

Embodiment 4. The battery cell according to Embodiment 3, wherein the connecting portion comprises a main body portion and a first concave portion, the main body portion is disposed around an outer periphery of the first concave portion, the main body portion is used for connecting the first connecting member and the first tab, the first concave portion is recessed from an outer surface of the main body portion in a direction facing the electrode assembly, the electrode lead-out hole penetrates a bottom wall of the first concave portion, and communicates the first concave portion with an inner portion of the casing;
the battery cell further comprises a first insulating member, the first concave portion is configured to accommodate at least a portion of the first insulating member, and a portion of the first insulating member that is accommodated within the first concave portion is attached to a side wall and/or the bottom wall of the first concave portion.

Embodiment 5. The battery cell according to Embodiment 4, wherein a thickness of the main body portion is greater than a wall thickness of the cylinder body.

Embodiment 6. The battery cell according to Embodiment 5, wherein a difference between the thickness D1 of the main body portion and the wall thickness D2 of the cylinder body satisfies: 0.1 mm≤ D1-D2≤2 mm.

Embodiment 7. The battery cell according to any one of Embodiments 4-6, wherein the cylinder body is cylindrical, the electrode lead-out hole is a circular hole, a central axis of the cylinder body and a central axis of the electrode lead-out hole are arranged to overlap.

Embodiment 8. The battery cell according to Embodiment 7, wherein an inner radius L1 of the cylinder body and a width L2 of the main body portion satisfy: 0.2≤L2/L1≤0.8, and the width L2 of the main body portion is a difference between an outer radius of the main body portion and an inner radius of the main body portion.

Embodiment 9. The battery cell according to any one of Embodiments 4-8, wherein the main body portion is used for welding with the first connecting member and forming a first welding area on the main body portion, the first welding area is disposed to be spaced apart from a first end portion of the bending portion, and the first end portion is used for connecting the main body portion.

Embodiment 10. The battery cell according to Embodiment 9, wherein a welding depth D3 of the first welding area and the thickness D1 of the main body portion satisfy: 0.1≤D3/D1≤0.8.

Embodiment 11. The battery cell according to any one of Embodiments 4-10, wherein the battery cell further comprises a second insulating member, the second insulating member comprises an insulating body and an insulating protrusion protruding from an outer periphery of the insulating body, the insulating body abuts on a side of the main body portion facing the electrode assembly, the insulating protrusion is arranged on a side of the bending portion facing the electrode assembly, a surface of the insulating protrusion away from the electrode assembly is closer to the electrode assembly than a surface of the insulating body away from the electrode assembly, so as to form a second concave portion for avoiding the bending portion.

Embodiment 12. The battery cell according to Embodiment 11, wherein the insulating protrusion protrudes beyond a second end portion of the bending portion in a direction facing the electrode assembly, and the second end portion is used for connecting the cylinder body.

Embodiment 13. The battery cell according to Embodiment 11 or 12, wherein an inner surface of the insulating body is formed with a third concave portion recessed in a direction away from the electrode assembly, and at least part of the electrode terminal is accommodated within the third concave portion.

Embodiment 14. The battery cell according to any one of Embodiments 11-13, wherein a thickness of the insulating body is greater than a thickness of the main body portion.

Embodiment 15. The battery cell according to any one of Embodiments 4 to 14, wherein a convex portion is formed at a position on the connecting portion opposite to the first concave portion, and the convex portion protrudes from an inner surface of the main body portion in a direction facing the electrode assembly;
the connecting portion further comprises a fourth concave portion, the fourth concave portion is recessed from a top end surface of the convex portion to the inner surface of the main body portion in a direction away from the electrode assembly;
the battery cell further comprises a second insulating member, the fourth concave portion is configured to accommodate at least part of the second insulating member, and the part of the second insulating member that is accommodated within the fourth concave portion is attached to a side wall and/or a bottom wall of the fourth concave portion.

Embodiment 16. The battery cell according to any one of Embodiments 3-15, wherein the bending portion comprises a first end portion for connecting the connecting portion and a second end portion for connecting the cylinder body, and in a direction from the first end portion to the second end portion, a thickness of the bending portion gradually decreases.

Embodiment 17. The battery cell according to any one of Embodiments 1-16, wherein the second tab is provided at one end of the electrode assembly facing the cover body, and the first tab is provided at the other end of the electrode assembly away from the cover body;
the cylinder body is used for connecting the first tab and the cover body, to enable the first tab to be electrically connected to the cover body.

Embodiment 18. The battery cell according to any one of Embodiments 1-17, wherein the first tab is a negative pole tab, and a base material of the casing is steel.

Embodiment 19. The battery cell according to any one of Embodiments 1-18, wherein the cylinder body has an opening at one end away from the cover body, and the battery cell further comprises a cover plate for closing the opening.

Embodiment 20. A battery comprising:
the battery cell according to any one of Embodiments 1-19;
the first connecting member connected to the cover body; and
the second connecting member connected to the electrode terminal.

Embodiment 21. An electrical device comprising the battery of Embodiment 20 for providing electrical energy.

Embodiment 22. A method for manufacturing a battery cell, comprising:
providing a casing and an electrode terminal, wherein the casing comprises a cylinder body and a cover body connected to the cylinder body, the cover body is provided with an electrode lead-out hole, the cylinder body has an opening at one end away from the cover body, and the electrode terminal is disposed at the cover body in an insulating manner and installed at the electrode lead-out hole;
providing an electrode assembly comprising a first tab and a second tab with opposite polarities;
installing the electrode assembly into the casing, to enable the cylinder body to be disposed around an outer periphery of the electrode assembly and the second tab to be electrically connected to the electrode terminal;
providing a cover plate, wherein the cover plate is connected to the cylinder body to close an opening of the cylinder body, and the first tab is electrically connected to the cover plate to enable the first tab to be electrically connected to the cover body through the cover plate and the cylinder body;
wherein, at least part of the cover body is used for electrically connecting the first connecting member of the battery and the first tab, the electrode terminal is used for electrically connecting the second connecting member of the battery and the second tab, one of the cover body and the electrode terminal is a positive output pole of the battery cell, and the other is a negative output pole of the battery cell.

Embodiment 23. A system for manufacturing a battery cell, comprising:
a first providing means for providing a casing and an electrode terminal, wherein the casing comprises a cylinder body and a cover body connected to the cylinder body, the cover body is provided with an electrode lead-out hole, the cylinder body has an opening at one end away from the cover body, and the electrode terminal is disposed at the cover body in an insulating manner and installed at the electrode lead-out hole;
a second providing means for providing an electrode assembly comprising a first tab and a second tab with opposite polarities;
a first assembling means for installing the electrode assembly into the casing, to enable the cylinder body to be disposed around an outer periphery of the electrode assembly and the second tab to be electrically connected to the electrode terminal;
a second assembling means for providing a cover plate, wherein the cover plate is connected to the cylinder body to close an opening of the cylinder body, and the first tab is electrically connected to the cover plate to enable the first tab to be electrically connected to the cover body through the cover plate and the cylinder body;
wherein, at least part of the cover body is used for electrically connecting the first connecting member of the battery and the first tab, the electrode terminal is used for electrically connecting the second connecting member of the battery and the second tab, one of the cover body and the electrode terminal is a positive output pole of the battery cell, and the other is a negative output pole of the battery cell.

It should be noted that the embodiments in the present application and features in the embodiments may be combined with each other without conflict.

Finally it should be noted that: the above embodiments are only for illustrating technical solutions of the present application, rather than for limiting; although the present application has been described in detail with reference to the foregoing embodiments, those of ordinary skill in the art should understand: it is still possible to modify the technical solutions recited in the foregoing embodiments, or perform equivalent replacements to some of the technical features thereof, however, these modifications or replacements do not make an essence of the corresponding technical solutions deviate from the spirit and scope of the technical solutions of the embodiments of the present application.

## Claims

1. A battery cell for use in a battery, comprising:
an electrode assembly, comprising a first tab and a second tab with opposite polarities;
a casing for accommodating the electrode assembly, wherein the casing comprises a cylinder body and a cover body connected to the cylinder body, the cylinder body is disposed around an outer periphery of the electrode assembly, the cover body is provided with an electrode lead-out hole, and at least part of the cover body is used for electrically connecting a first connecting member of the battery and the first tab; and
an electrode terminal for electrically connecting a second connecting member of the battery and the second tab, wherein the electrode terminal is disposed at the cover body in an insulating manner and installed at the electrode lead-out hole, one of the cover body and the electrode terminal is a positive output pole of the battery cell, and the other is a negative output pole of the battery cell;
wherein the cover body and the cylinder body are formed as an integral structure;
wherein the second tab is provided at one end of the electrode assembly facing the cover body, and the first tab is provided at the other end of the electrode assembly away from the cover body;
the cylinder body is used for connecting the first tab and the cover body, to enable the first tab to be electrically connected to the cover body;
wherein the cylinder body has an opening at one end away from the cover body, and the battery cell further comprises a cover plate for closing the opening.

2. The battery cell according to claim 1, wherein the cylinder body (21) is electrically connected to the first tab (11) directly, or is electrically connected to the first tab (11) through the cover plate (40).

3. The battery cell according to claim 1, wherein the electrode terminal (30) includes a terminal body (31), the terminal body (31) includes a columnar portion (311), a first limiting portion (312) and a second limiting portion (313), at least a portion of the columnar portion (311) is located within the electrode lead-out hole (221), both the first limiting portion (312) and the second limiting portion (313) are connected to and protrude from an outer side wall of the columnar portion (311), the first limiting portion (312) and the second limiting portion (313) are respectively disposed on an outer side and an inner side of the connecting portion in the first direction X, and are used for clamping a portion of the connecting portion.

4. The battery cell according to claim 3, wherein the terminal body (31) has an inner surface and an outer surface disposed opposite to each other, and the inner surface (314) of the terminal body faces the electrode assembly (10); the columnar portion (311) is provided with a fifth concave portion (311a) which is recessed from the outer surface (315) of the terminal body in the direction facing the electrode assembly (10); a bottom of the fifth concave portion (311) a forms an adapter portion (311b) for welding to the current-collecting member (50).

5. The battery cell according to claim 4, the electrode terminal (30) further includes a sealing plate (32), and the sealing plate (32) closes an opening of the fifth concave portion (311a); wherein preferably, the sealing plate (32) is located entirely outside the fifth concave portion (311a), or is partially accommodated within the fifth concave portion (311a), as long as the sealing plate (32) closes the opening of the fifth concave portion (311a).

6. The battery cell according to claim 5, wherein the fifth concave portion (311a) is a stepped concave portion, and at least part of the sealing plate (32) is accommodated within the fifth concave portion (311a) and supported by a stepped surface of the fifth concave portion (311a).

7. The battery cell according to claims 5 or 6, wherein the sealing plate (32) is used for welding with the second connecting member (82) and a second welding portion (W2) is formed.

8. The battery cell according to any of claims 5 to 7, wherein at least part of the sealing plate (32) protrudes from the outer surface (315) of the terminal body (31).

9. The battery cell according to claim 1, wherein the cylinder body (21) is cylindrical, the electrode lead-out hole (221) is a circular hole, and a central axis of the cylinder body (21) and a central axis of the electrode lead-out hole (221) are arranged to overlap.

10. The battery cell according to claim 1, wherein the cover body comprises a connecting portion and a bending portion, the electrode lead-out hole is provided on the connecting portion, at least a portion of the connecting portion is used for connecting the first connecting member and the first tab, and the bending portion is used for connecting the cylinder body and the connecting portion.

11. The battery cell according to claim 10, wherein the connecting portion comprises a main body portion and a first concave portion, the main body portion is disposed around an outer periphery of the first concave portion, the main body portion is used for connecting the first connecting member and the first tab, the first concave portion is recessed from an outer surface of the main body portion in a direction facing the electrode assembly, the electrode lead-out hole penetrates a bottom wall of the first concave portion, and communicates the first concave portion with an inner portion of the casing;
the battery cell further comprises a first insulating member, the first concave portion is configured to accommodate at least a portion of the first insulating member, and a portion of the first insulating member that is accommodated within the first concave portion is attached to a side wall and/or the bottom wall of the first concave portion.

12. The battery cell according to claim 11, wherein a thickness of the main body portion is greater than a wall thickness of the cylinder body.

13. The battery cell according to claim 12, wherein a difference between the thickness D1 of the main body portion and the wall thickness D2 of the cylinder body satisfies: 0.1 mm≤D1-D2 ≤2 mm.

14. The battery cell according to any one of claims 1, 11-13, wherein the cylinder body is cylindrical, the electrode lead-out hole is a circular hole, a central axis of the cylinder body and a central axis of the electrode lead-out hole are arranged to overlap.

15. The battery cell according to claim 14, wherein an inner radius L1 of the cylinder body and a width L2 of the main body portion satisfy: 0.2^L2/L1^0.8, and the width L2 of the main body portion is a difference between an outer radius of the main body portion and an inner radius of the main body portion.

16. The battery cell according to any one of claims 11-15, wherein the main body portion is used for welding with the first connecting member and forming a first welding area on the main body portion, the first welding area is disposed to be spaced apart from a first end portion of the bending portion, and the first end portion is used for connecting the main body portion.

17. The battery cell according to claim 16, wherein a welding depth D3 of the first welding area and the thickness D1 of the main body portion satisfy: 0.1≤D3/D1≤0.8.

18. The battery cell according to any one of claims 11-17, wherein the battery cell further comprises a second insulating member, the second insulating member comprises an insulating body and an insulating protrusion protruding from an outer periphery of the insulating body, the insulating body abuts on a side of the main body portion facing the electrode assembly, the insulating protrusion is arranged on a side of the bending portion facing the electrode assembly, a surface of the insulating protrusion away from the electrode assembly is closer to the electrode assembly than a surface of the insulating body away from the electrode assembly, so as to form a second concave portion for avoiding the bending portion.

19. The battery cell according to claim 18, wherein the insulating protrusion protrudes beyond a second end portion of the bending portion in a direction facing the electrode assembly, and the second end portion is used for connecting the cylinder body.

20. The battery cell according to claim18 or 19, wherein an inner surface of the insulating body is formed with a third concave portion recessed in a direction away from the electrode assembly, and at least part of the electrode terminal is accommodated within the third concave portion.

21. The battery cell according to any one of claims 18-20, wherein a thickness of the insulating body is greater than a thickness of the main body portion.

22. The battery cell according to any one of claims 11 to 21, wherein a convex portion is formed at a position on the connecting portion opposite to the first concave portion, and the convex portion protrudes from an inner surface of the main body portion in a direction facing the electrode assembly;
the connecting portion further comprises a fourth concave portion, the fourth concave portion is recessed from a top end surface of the convex portion to the inner surface of the main body portion in a direction away from the electrode assembly;
the battery cell further comprises a second insulating member, the fourth concave portion is configured to accommodate at least part of the second insulating member, and the part of the second insulating member that is accommodated within the fourth concave portion is attached to a side wall and/or a bottom wall of the fourth concave portion.

23. The battery cell according to any one of claims 10-22, wherein the bending portion comprises a first end portion for connecting the connecting portion and a second end portion for connecting the cylinder body, and in a direction from the first end portion to the second end portion, a thickness of the bending portion gradually decreases.

24. The battery cell according to any one of claims 1-23, wherein the first tab is a negative pole tab, and a base material of the casing is steel.

25. A battery comprising:
the battery cell according to any one of claims 1-24;
the first connecting member connected to the cover body; and
the second connecting member connected to the electrode terminal.

26. An electrical device comprising the battery of claim 25 for providing electrical energy.

27. A method for manufacturing a battery cell, comprising:
providing a casing and an electrode terminal, wherein the casing comprises a cylinder body and a cover body connected to the cylinder body, the cover body is provided with an electrode lead-out hole, the cylinder body has an opening at one end away from the cover body, and the electrode terminal is disposed at the cover body in an insulating manner and installed at the electrode lead-out hole;
providing an electrode assembly comprising a first tab and a second tab with opposite polarities;
installing the electrode assembly into the casing, to enable the cylinder body to be disposed around an outer periphery of the electrode assembly and the second tab to be electrically connected to the electrode terminal;
providing a cover plate, wherein the cover plate is connected to the cylinder body to close an opening of the cylinder body, and the first tab is electrically connected to the cover plate to enable the first tab to be electrically connected to the cover body through the cover plate and the cylinder body;
wherein, at least part of the cover body is used for electrically connecting the first connecting member of the battery and the first tab, the electrode terminal is used for electrically connecting the second connecting member of the battery and the second tab, one of the cover body and the electrode terminal is a positive output pole of the battery cell, and the other is a negative output pole of the battery cell.

28. A system for manufacturing a battery cell, comprising:
a first providing means for providing a casing and an electrode terminal, wherein the casing comprises a cylinder body and a cover body connected to the cylinder body, the cover body is provided with an electrode lead-out hole, the cylinder body has an opening at one end away from the cover body, and the electrode terminal is disposed at the cover body in an insulating manner and installed at the electrode lead-out hole;
a second providing means for providing an electrode assembly comprising a first tab and a second tab with opposite polarities;
a first assembling means for installing the electrode assembly into the casing, to enable the cylinder body to be disposed around an outer periphery of the electrode assembly and the second tab to be electrically connected to the electrode terminal;
a second assembling means for providing a cover plate, wherein the cover plate is connected to the cylinder body to close an opening of the cylinder body, and the first tab is electrically connected to the cover plate to enable the first tab to be electrically connected to the cover body through the cover plate and the cylinder body;
wherein, at least part of the cover body is used for electrically connecting the first connecting member of the battery and the first tab, the electrode terminal is used for electrically connecting the second connecting member of the battery and the second tab, one of the cover body and the electrode terminal is a positive output pole of the battery cell, and the other is a negative output pole of the battery cell.
